Europäisches Patentamt

European Patent Office

Office européen des brevets

(11) Veröffentlichungsnummer: **0 004 612**
**A1**

## EUROPÄISCHE PATENTANMELDUNG

(21) Anmeldenummer: 79100882.4

(22) Anmeldetag: 23.03.79

(51) Int. Cl.²: **B 60 P 1/64**

(30) Priorität: 01.04.78 DE 2814136

(43) Veröffentlichungstag der Anmeldung:
17.10.79 Patentblatt 79/21

(84) Benannte Vertragsstaaten:
BE CH FR GB IT LU NL SE

(71) Anmelder: Paul Nutzfahrzeug KG
Danziger Strasse 49
D-8390 Passau(DE)

(72) Erfinder: Josef, Paul
keine Strassenbez.
D-8358 Zeitlarn Nr. 12 1/3(DE)

(74) Vertreter: Wasmeier, Alfons, Dipl.-Ing. et al,
Postfach 382
D-8400 Regensburg 1(DE)

(54) Aufbauwechseleinrichtung für Nutzfahrzeuge.

(57) Eine Einrichtung zum Wechseln von Aufbauten für Nutzfahrzeuge besitzt am Fahrzeugrahmen (4) befestigte vordere und hintere Heberahmen (13) mit horizontal liegenden Heberädern (8), die zum Anheben und Absenken des Aufbaues (5) in Führungsprofile (7) des Aufbaues eingreifen. Zum Anheben des Wechselaufbaues sind Hydraulikhubvorrichtungen (10) zwischen Fahrzeugrahmen (4) und Lenkern (12) für diese Heberäder vorgesehen. Das Verriegeln und Entriegeln zwischen Wechselaufbau (5) und Fahrzeug (1) erfolgt mit Hilfe von am Fahrzeug befestigten Haltern, die mit am Wechselaufbau befestigten Haltebolzen über eine von der Fahrzeugrückseite von außen bedienbare Zug-Drehvorrichtung verspannt werden. Zum Abstellen des Aufbaus (5) sind in dessen Rahmen (6) vier herausschwenkbare Stützen (14) vorgesehen.

EP 0 004 612 A1

0004612

<u>"Aufbauwechseleinrichtung für Nutzfahrzeuge"</u>

Die Erfindung bezieht sich auf eine Einrichtung zum Wechseln von Aufbauten für Nutzfahrzeuge, wobei ein Basisfahrzeug unter einen auf Stützen ruhenden Aufbau gefahren und der Aufbau auf dem Rahmen des Basisfahrzeuges abgesetzt sowie auf ihm festgelegt wird.

Es sind Spezialnutzfahrzeuge bekannt, die spezifisch dem jeweiligen Bedarf angepaßt sind und die nur für diesen Spezialzweck eingesetzt werden können.

Ferner sind sogen. Motor-Caravans (Wohnmobile, Dormobile oder dergl.) bekannt, bei denen der Wohnaufbau alsFestaufbau mit dem Fahrgestell verbunden ist. Derartige Fahrzeuge dienen als reine Freizeitfahrzeuge und sind nur als solche nutzbar.

Aufgrund der ständig steigenden Kosten für Anschaffung und Unterhaltung von Spezialnutzfahrzeugen für unterschiedliche Anwendungsfälle besteht in zunehmendem Maße Bedarf an austauschbaren Aufbauten, um die Einsatzmöglichkeit eines Basisfahrzeuges grundlegend zu erweitern und den Ausnutzungsgrad derartiger Fahrzeuge wesentlich zu verbessern.

Beispielsweise bietet sich bei Autoverleihfirmen ein Austausch zwischen Pritschen-, Koffer-, Wohnmobilaufbauten und dergl. an, bei Gewerbebetrieben der Austausch von verschiedenartigen Pritschenaufbauten, bei Handelsunternehmen die Verwendung gleicher Aufbauten, z.B. dann, wenn Ladegut zum Kunden ausgefahren und in Lager ein weiterer Aufbau beladen wird, bei Bauunternehmen der Transport von Aufbauten, die z.B. als Baustellenbüros ausgestattet sind, usw. In allen Fällen lassen sich darüber hinaus die Fahrzeuge für Freizeitzwecke nutzen, wenn der gewerbliche Aufbau gegen einen Wohnmobilaufbau ausgewechselt wird.

Aufgabe der Erfindung ist es, bei derartigen Basisfahrzeugen mit Wechselaufbauten Vorkehrungen zu treffen, um die Aufbauten auf einfache und schnelle Weise wechseln zu können und die hierfür erforderlichen Einrichtungen bei aufgesetztem Aufbau möglichst unsichtbar anzuordnen.

Diese Aufgabe wird bei der gattungsgemäßen Einrichtung durch eine aus einem vorderen und einem hinteren Heberahmen bestehende, am Fahrzeugrahmen befestigte Hebevorrichtung mit in einer horizontalen Ebene liegenden Tragrädern gelöst, die zum Anheben und Absenken des Wechselaufbaus in Führungsprofile des Wechselaufbaus eingreifen und über Hydraulikzylinder heb- und senkbar sind. Die seitlich eingebauten und aus der senkrechten in die waagerechte Position und umgekehrt schwenkbaren vier Stützen sind jeweils über ein Verschlußstück festgelegt und vorzugsweise besitzen die Stützen ein vertikal daran befestigtes Stützrohr, das die Verdrehung der Stützen steuert und das mit der inneren und der äußeren Lagerung zu einer kraftschlüssigen Einheit verbunden ist. Stützrohr und Lagerung sind zweckmäßigerweise mittels Spannschrauben miteinander verbunden. Die vier im Aufbau starr befestigten, z.B. verschweißten Stützen sind innen verriegelt.

Der Wechselaufbau ist mit dem Fahrzeugrahmen durch eine Verschließvorrichtung verriegelt, die bei einer Drehung der Stütze gleichzeitig entriegelbar ist. Dabei weist der Aufbauverschluß einen sich selbst nachstellenden Haken auf.

Bei einer speziellen Ausgestaltung der Erfindung sind die um eine vertikale Achse drehbar gelagerten Tragräder auf einer in horizontaler, quer zur Fahrtrichtung drehbaren Welle befestigt. Ferner sind vorderer und hinterer Heberahmen über eine Verbindungsstange miteinander verbunden, und den beiden Heberahmen sind vier Hydraulikzylinder zugeordnet.

In weiterer Ausgestaltung der Erfindung wird zur vereinfachten Verriegelung und Entriegelung des Fahrzeugrahmens mit dem

0004612

Wechselaufbau vorgeschlagen, daß den Rahmen des Wechselaufbaus und den Rahmen des Basisfahrzeuges verbindende Haltebolzen fest mit dem Wechselrahmen verbunden sind, daß am LKW-Rahmen mit den Haltebolzen in Eingriff bringbare Halter befestigt sind, daß eine die beiden Halter beaufschlagende, durchgehende Zug-Drehvorrichtung von einer äußeren Stelle des Wechselrahmens an der Fahrzeugrückseite betätigbar ist, derart, daß der Abstand der Drehpunkte der Halter verkürzt bzw. verlängert wird und dadurch an den Haltebolzen eine Verspannung herbeigeführt oder die Verspannung gelöst wird. Die Halter weisen vorzugsweise nasenförmige Aussparungen zum Eingriff in die Haltebolzen auf und sind um Haken drehbar angeordnet. Ferner sind am Fahrzeugrahmen Führungsplatten mit schwalbenschwanzförmigen bzw. keilförmigen Ausnehmungen zur Aufnahme der Haltebolzen vorgesehen. Im einzelnen besteht die Zug-Drehvorrichtung aus einer nichtdrehbaren Zugstange und einer damit gekoppelten Zug-Drehstange, welche vom hinteren Fahrzeugende aus betätigbar ist. Bei Betätigung dieser Zug-Drehvorrichtung werden die in Fahrtrichtung hintereinanderliegenden Halter aufeinander zu und voneinander weg verdrehbar ausgebildet.

Mit der erfindungsgemäßen Einrichtung wird ein einfaches, schnelles und effektes Auswechseln unterschiedlicher Aufbauten auf Nutzfahrzeugen bzw. Basisfahrzeugen gewährleistet. Ferner wird damit erreicht, daß die Wechseleinrichtung bei aufgesetztem Aufbau unsichtbar ist. Auch läßt sich mit der erfindungsgemäßen Einrichtung die Bauhöhe der Wechseleinrichtung besonders niedrig halten. Schließlich ermöglicht die erfindungsgemäße Verriegelung eine besonders einfache Entriegelung, insbes. zweier Verbindungen gleichzeitig, wobei die Entriegelung vom hinteren Ende des Fahrzeuges aus vorgenommen werden kann.

Die Arbeitsweise der erfindungsgemäßen Aufbauwechseleinrichtung ist folgende: Nach Lösen der Verriegelung und Öffnen der Haken am hinteren Ende des Fahrzeuges mittels eines Betätigungsschlüssels wird der Wechselaufbau durch Betätigen einer Hydraulikpumpe (z.B. Handpumpe), die das Ausfahren von vier Hydraulikzylindern bewirkt,

0004612

soweit angehoben, daß die vier seitlich eingebauten Stützen am Wechselaufbau ausgefahren werden können. Die Hydraulikzylinder heben den Wechselaufbau über zwei Heberahmen an, die durch ihr Eigengewicht die vier Hydraulikzylinder in die eingefahrene Stellung zurückbringen. Die Heberahmen mit ihren jeweils zwei Führungs- und Heberädern greifen in die U-förmig ausgeführten Wechselrahmenlängsträger ein und heben dadurch den Träger an.

Die mit dem Wechselrahmen verbundenen vier ausziehbaren Stützen zum Absetzen lassen sich in jeder Ausfahrhöhe verriegeln (z.B. mit einer Klemmvorrichtung). Ferner ist eine Höhenregulierung jeder Zeit, auch bei beladenem Wechselaufbau, mit Hilfe eines Betätigungsschlüssels möglich.

Nach dem Absenken der Hydraulikzylinder und dem Abstellen des Aufbaues auf die Stützen kann das Basisfahrzeug unter dem Wechselaufbau herausgefahren werden und steht für andere Zwecke zur Verfügung. Für die Durchführung eines derartigen Wechselvorganges sind folgende Schritte erforderlich: Die Spannschrauben an den Stützen des Aufbaues werden mit Hilfe eines Steckschlüssels gelöst und entfernt, mit dem Steckschlüssel werden die hinter den Spannschrauben liegenden Sechskante eingedrückt, bis das Verschlußstück im Stützenrohr die Drehbewegung der Stütze ermöglicht; die Stützen werden auf den Boden abgestellt; mit der Drehbewegung erfolgt gleichzeitig das Entriegeln des Aufbauverschlusses, der über selbstnachstellende Haken den Aufbau mit dem Fahrzeugrahmen verbindet.

Der Wechselaufbau wird mit Hilfe der Hydraulikzylinder ausgehoben, die durch eine Pumpe mit Handbetrieb oder elektrischem Betrieb, vorzugsweise vom Fahrerhaus aus, betätigt wird. An der Pumpe befindet sich ein Umschaltventil mit den Stellungen "Hebenlast unabhängig" (wobei das vordere und das hintere Zylinderpaar gleichmäßig mit Drucköl beaufschlagt werden), "Hebenlast abhängig" (wobei das Hydraulikzylinderpaar angehoben wird, das weniger belastet ist; damit lassen sich beispielsweise Geländeunebenheiten ausgleichen), und "Senken" (das Absenken wird durch automatische Senkdrosseln gleichmäßig für jedes Zylinderpaar erreicht, so daß sich der Wechselaufbau nicht nach einer Richtung neigt und sich auch entsprechend langsam absenkt).

Die Stützen werden am Aufbau in die senkrechte Stellung eingerastet. Die Spannschrauben werden an den Stützen zur Sicherung eingeschraubt und die Stützbeinverlängerung zur Berührung mit dem Boden ausgezogen. Die Hydraulik (Stellung "Senken") wird entlastet, bis der Aufbau auf seinen eigenen Stützen steht. Das Fahrzeug wird dann unter dem Aufbau herausgefahren und der Heberahmen endgültig abgesenkt.

Da alle verkehrsnotwendigen Einrichtungen, wie Kotflügel, Beleuchtungseinrichtung hinten, Kennzeichen usw. am Fahrzeug montiert sind, ist das Fahrzeug mit Wechselaufbau zum Verkehr zugelassen.

Das Hebesystem besteht aus vorderem und hinterem Heberahmen, die mittels Gleitlagern am Fahrzeugrahmen befestigt sind und jeweils über zwei Hydraulikzylinder ausgehoben werden können. Am oberen Ende des Heberahmens sind auf einer in horizontaler, quer zur Fahrtrichtung drehbaren Welle zwei Kunststoffräder montiert, die um die vertikale Achse drehbar gelagert sind. Diese Räder greifen in das Führungsprofil des Aufbaues ein. Eine Verbindungsstange zwischen vorderem und hinterem Heberahmen gewährleistet die parallele und waagerechte Lage der Räder in jedem Hebezustand. Die zweikreisige Hydraulikanlage garantiert das lastunabhängige Ausfahren des vorderen und des hinteren Heberahmens.

Die vier im Aufbau verschweißten Stützen haben Innenverriegelung, d.h. daß von außen keine Verriegelungsteile sichtbar sind oder zu betätigen sind. Dies ist aus optischen und technischen Gründen bei Aufbauten für Motorcaravans notwendig. Die einzig sichtbaren Stellen sind jeweils zwei seitliche Öffnungen 26 in der Aufbaubeplankung mit den Klemmschrauben. Die Stützen sind im Aufbau gelagert, wobei die äußere Lagerung die Verriegelungskräfte aufnimmt. Das Verschlußstück im Inneren des Stützenrohres gibt, wenn es eingedrückt wird, die Drehbewegung der Stütze entgegen einer Federkraft frei. Die Spannschraube außen verbindet das Stützenrohr mit der inneren und der äußeren Lagerung zu einer kraftschlüssigen Einheit, so daß eine Entlastung des Verschlußstückes eintritt. Dadurch wird ein Klappern im Fahrbetrieb wirksam verhindert.

Der Aufbaurahmen selbst bildet die Grundlage für alle Pritschen-, Koffer- oder Motorcaravanaufbauten. Es besteht aus zwei Längsträgern, die durch ihre spezielle Profilierung gleichzeitig als Führung für die Heberäder dienen. Querträger und Außenprofile sind mit den Längsträgern zum Aufbaurahmen verschweißt. Am zweiten Querträger von vorne ist ein Anschlag vorgesehen, der die Lage des Aufbaues fixiert, wenn das Fahrzeug unter den Aufbau einfährt. Das Gegenstück dazu ist am vorderen Heberahmen vorgesehen.

Nachstehend wird die Erfindung in Verbindung mit der Zeichn-ung anhand von Ausführungsbeispielen erläutert. Es zeigen:

Fig. 1 eine Ausführungsform einer Aufbauwechseleinrichtung nach der Erfindung in Gesamtansicht und in seitlicher Darstellung

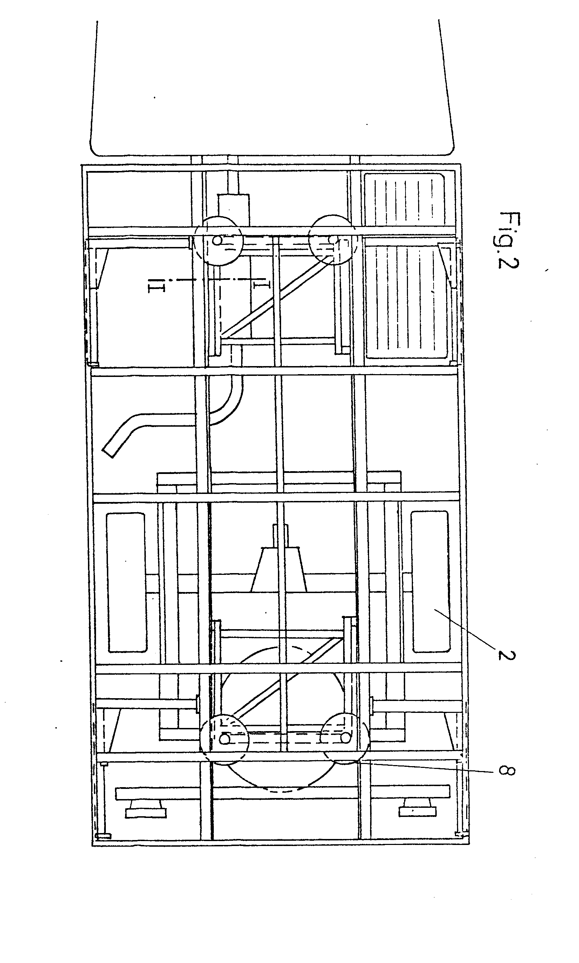

Fig. 2 die Aufbauwechseleinrichtung nach Fig. 1 in Aufsicht,

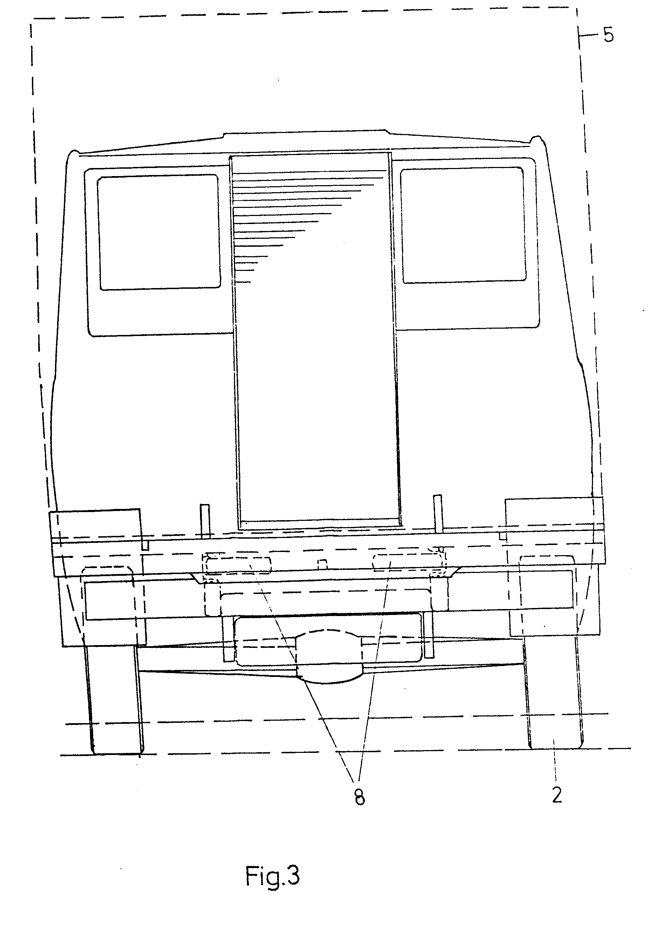

Fig. 3 eine Rückansicht der Darstellung nach Fig. 1,

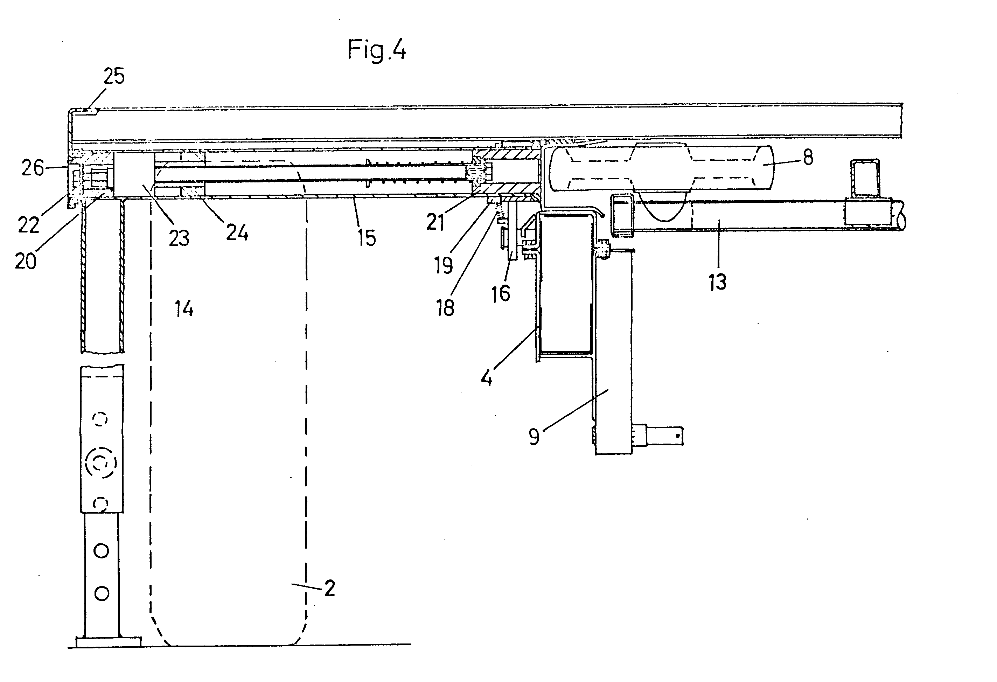

Fig. 4 in vergrößertem Maßstab und im Schnitt längs der Linie I-I einen Ausschnitt aus der Aufbauwechseleinrichtung nach den Figuren 1 bis 3,

Fig. 5 eine andere Ausführungsform einer Aufbauwechseleinrichtung mit spezieller Ausgestaltung der Verriegelung, in Gesamtansicht,

Fig. 6 eine Detailansicht eines Ausschnittes der Darstellung nach Fig. 5, die speziell die Verriegelung betrifft, und

Fig. 7 eine Darstellung der Verriegelungseinrichtung nach Fig. 6 im Schnitt längs der Linie II-II der Fig. 6.

0004612

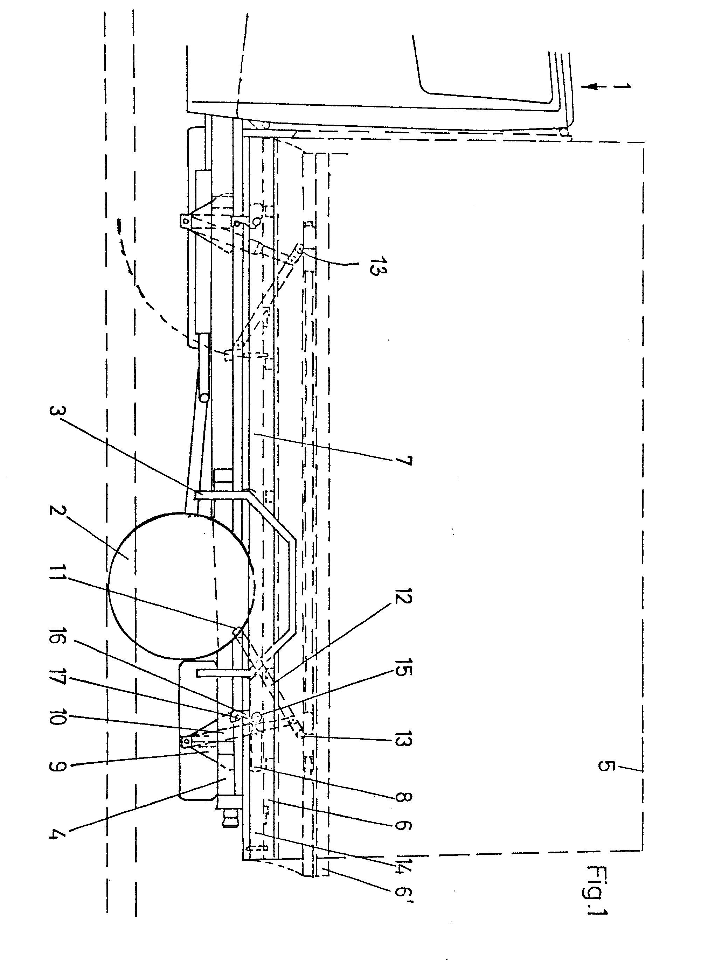

Das Basisfahrzeug 1 ist in Fig. 1 angedeutet mit vollausgezogenen Linien dargestellt; von ihm sind das Hinterrad 2, das Schutzblech 3 und der Fahrzeuglängsträger 4 gezeigt. An diesem Basisfahrzeug 1 ist ein Wechselaufbau 5 gestrichelt dargestellt, der einen Wechselaufbaurahmen 6 besitzt, welcher in seiner angehobenen Position mit 6' gestrichelt angedeutet ist. In den Längsteilen des Wechselaufbaurahmens 6 sind Führungsprofile 7 für die Heberäder 8 vorgesehen, die horizontal in vertikalen Wellen gelagert angeordnet sind, so daß damit die Bauhöhe wesentlich reduziert werden kann. An den Fahrzeuglängsträgern 4 sind Abstützungen 9 für die Hydraulikzylinder 10 vorgesehen, die zum Anheben des Aufbaues 5 über eine Hand- oder eine Elektrohydraulikpumpe mit zwei unabhängigen Ölkreisläufen betätigbar sind. Das obere Ende der Hydraulikzylinder ist jeweils mit einem bei 11 im Fahrzeuglängsträger 4 oder einer entsprechenden Stelle des Basisfahrzeugrahmens gelagerten Lenker 12 verbunden, dessen oberes Ende mit dem jeweiligen Heberahmen 13 befestigt ist, der die entsprechenden Heberäder 8 aufnimmt.

Der Wechselaufbau 5 weist an seinem Wechselaufbaurahmen 6 schwenkbare Stützen 14 mit jeweiligem horizontal verlaufendem Stützenrohr 15 auf; die Stützen 14 sind von einer vertikalen in eine horizontale Position schwenkbar. Am Stützenrohr 15 ist ein Haken 16 befestigt, der mit einem am Fahrzeuglängsträger 4 befestigten Verriegelungsbolzen 17 zur Verriegelung des Wechselaufbaues am Basisfahrzeugrahmen ausgebildet ist. Der Haken 16 steht unter Vorspannung einer Feder 18, die bei 19 am Stützenrohr 14 festgelegt ist.

Das Stützenrohr 15 weist ein äußeres Lager 20 und ein inneres Lager 21 und eine konzentrisch angeordnete Spannschraube 22 auf. Ferner ist im Stützenrohr 15 ein Verschlußstück 23 und eine Führung 24 angeordnet. Das Verschlußstück 23 steuert und sperrt die Schwenkbewegung der Stütze 14. Der Aufbauträger 6 weist ein Außenprofil 25 auf, das durch eine Öffnung 26 den Zugang zur Spannschraube 22 ergibt; diese Öffnung 26 stellt die einzige sichtbare Unterbrechung des Außenprofiles dar, so daß die Aufbauwechseleinrichtung von außen so gut wie unsichtbar ist.

0004612

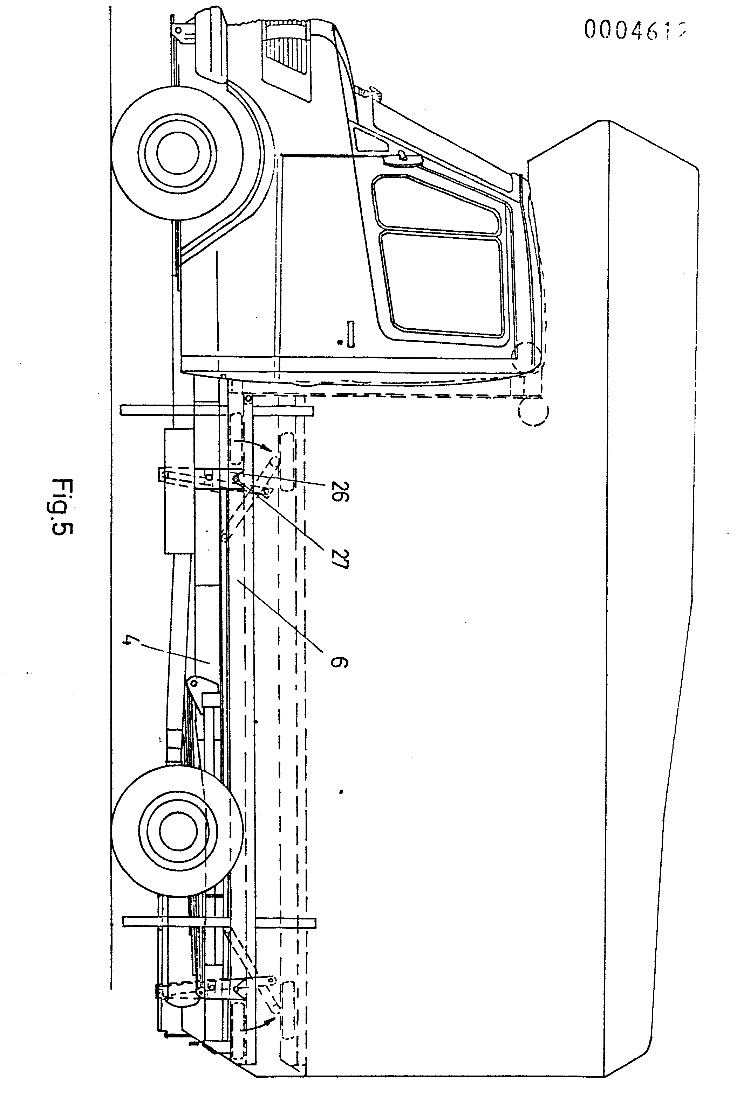

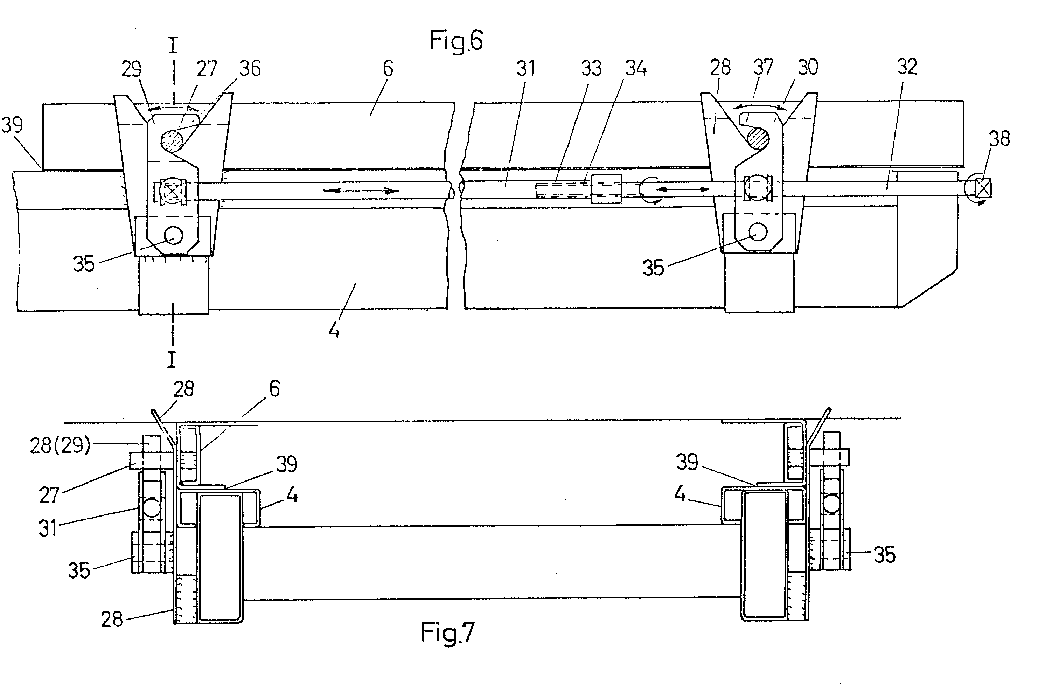

Der Wechselrahmen 6 ist, wie in den Figuren 5 bis 7 dargestellt,
mit dem Fahrzeugrahmen 4 durch vier Haltebolzen 27 fixiert, die
mit dem Wechselrahmen 6 starr verbunden sind, und die beim Aufsetzen des Wechselrahmens 6 auf den LKW-Rahmen 4 durch schwalbenschwanzartige Führungsplatten 28 in Längs- und Querrichtung exakt
in die gewünschte Lage gebracht und in dieser Lage gehalten werden.
Am Fahrzeugrahmen sind jeweils links und rechts Halter 29, 30 angebracht, die den Haltebolzen umgreifende Nasen 36, 37 aufweisen,
und die über eine Zugstange 31 und eine damit gekoppelte Zug-Drehstange 32 gegeneinander verspannt werden. Dies geschieht in der
Weise, daß die (nicht drehbare) Zugstange 31 mit einer Gewindebohrung 33 versehen ist, in die die Zug-Drehstange 32 mit Außengewinde 34 eingeschraubt ist. Bei einer Drehung der Zug-Drehstange
32 wird der Abstand der beiden Haken 35 gegeneinander verkürzt,
bis der Widerstand der Haltebolzen 27, 27 eine Verspannung der
Konstruktion ergibt. Das Öffnen der Haken 35 geschieht in umgekehrter Reihenfolge. Eine Sicherung gegen unbeabsichtigtes Lösen
der Verspannung wird durch eine Verdrehsicherung 38, z.B. eine
Federstange, am hinteren Ende der Zug-Drehstange 32 erreicht.
Die Betätigung der Dreh-Zugstange 32 erfolgt vom hinteren Ende
des Fahrzeuges aus mit Hilfe eines Betätigungsschlüssels.

Der Wechselaufbau mit Wechselrahmen 6 wird über vier einfach
wirkend ausgelegte Hydraulikzylinder angehoben; die Hydraulikzylinder werden durch das Eigengewicht der beiden Heberahmen in
die eingefahrene Stellung zurückgebracht. Die Heberahmen mit
ihren jeweils zwei Führungs- und Heberädern greifen in die U-förmig ausgeführten Wechselrahmenlängsträger ein und bewirken so
ein Anheben des Wechselaufbaus.

- 1 -

0004612

Patentansprüche :

1. Einrichtung zum Wechseln von Aufbauten für Nutzfahrzeuge, wobei ein Basisfahrzeug unter einen auf Stützen ruhenden Aufbau gefahren und der Aufbau auf den Rahmen des Basisfahrzeuges abgesetzt und auf ihm festgelegt wird, gekennzeichnet durch eine aus einem vorderen und einem hinteren Heberahmen (13, 13) bestehende, am Fahrzeugrahmen (4) befestigte Hebevorrichtung, an denen in einer horizontalen Ebene liegende Heberäder (8) befestigt sind, die zum Anheben und Absenken des Aufbaus (5) in Führungsprofile (7) des Aufbaues (5) eingreifen und über Hydraulikzylinder (10) heb- und senkbar sind.

2. Einrichtung nach Anspruch 1, dadurch gekennzeichnet, daß die seitlich eingebauten und aus der senkrechten in die waagerechte Position und umgekehrt schwenkbaren vier Stützen (14) jeweils über ein Verschlußstück (23) festgelegt sind.

3. Einrichtung nach Anspruch 2, dadurch gekennzeichnet, daß die Stützen (14) ein vertikal daran befestigtes Stützrohr (15) aufweisen, das die Verdrehung der Stützen steuert und das mit der inneren und der äußeren Lagerung (21, 20) zu einer kraftschlüssigen Einheit verbunden ist.

4. Einrichtung nach Anspruch 3, dadurch gekennzeichnet, daß das Stützrohr (15) und die Lagerung mittels Spannschrauben (22) miteinander verbunden sind.

5. Einrichtung nach Anspruch 1 bis 4, dadurch gekennzeichnet, daß die vier im Aufbau starr befestigten Stützen (14) innen verriegelt sind.

6. Einrichtung nach einem der Ansprüche 1 bis 5, dadurch gekennzeichnet, daß der Wechselaufbau (5) mit dem Fahrzeugrahmen (4) durch eine Verschließvorrichtung (16, 17, 18) verriegelt ist, die bei einer Drehung der Stütze (14) gleichzeitig entriegelbar ist.

0004612

7. Einrichtung nach einem der Ansprüche 1 bis 6, dadurch gekennzeichnet, daß der Aufbauverschluß (17) einen sich (über die Feder) selbstnachstellenden Haken (16) aufweist.

8. Einrichtung nach einem der Ansprüche 1 bis 8, dadurch gekennzeichnet, daß die um eine vertikale Achse drehbar gelagerten Heberäder (8) auf einer horizontalen, quer zur Fahrtrichtung drehbaren Welle befestigt sind.

9. Einrichtung nach einem der Ansprüche 1 bis 10, dadurch gekennzeichnet, daß den Rahmen des Wechselaufbaus und den Rahmen des Basisfahrzeuges verbindende Haltebolzen (27) fest mit dem Wechselrahmen verbunden sind, daß am LKW-Rahmen mit den Haltebolzen (27) in Eingriff bringbare Halter (29) befestigt sind, daß eine die beiden Halter (29) beaufschlagende, durchgehende Zug-Drehvorrichtung (31, 32) von einer äußeren Stelle des Wechselrahmens an der Fahrzeugrückseite betätigbar ist, derart, daß der Abstand der Drehpunkte (35) der Halter (29) verkürzt bzw. verlängert wird und dadurch an den Haltebolzen (27) eine Verspannung herbeigeführt oder die Verspannung gelöst wird.

10. Einrichtung nach Anspruch 8 oder 9, dadurch gekennzeichnet, daß am Fahrzeugrahmen befestigte Führungsplatten (28) mit schwalbenschwanzartigen bzw. keilförmigen Ausnehmungen zur Aufnahme der Haltebolzen (27) vorgesehen sind.

11. Einrichtung nach Anspruch 10, dadurchgekennzeichnet, daß die Zug-Drehvorrichtung (31, 32) aus einer nichtdrehbaren Zugstange (31) und einer damit gekoppelten Zug-Drehstange (32) besteht, und daß die Zug-Drehstange (32) vom hinteren Fahrzeugende aus betätigbar ist.

0004612

Fig.1

0004612

Fig.2

2

8

0004612

Fig.3

Fig.4

0004612

Fig.5

26

27

4

6

Fig.6

Fig.7

# EUROPÄISCHER RECHERCHENBERICHT

Europäisches Patentamt

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - B - 2 149 062 (ACKERMANN FAHR-ZEUGBAU) <br> * Spalten 3 bis 6; Fig. 1 bis 5 * | 1 |
| | -- | |
| X | DE - U - 6 750 322 (JANKO) <br> * Seiten 4 bis 6; Fig. 1 bis 5 * | 1 |
| | -- | |
| X | DE - A - 2 150 065 (HANOMAG-HENSCHEL) <br> * ganzes Dokument * | 2,3, <br> 4,5 |
| | -- | |
| X | DE - A - 1 949 697 (DAIMLER-BENZ) <br> * Seiten 3, 4; Fig. 1 bis 5 * | 9,11 |
| | -- | |
| | DE - B - 2 119 014 (WOHLFAHRTH-TRANSPORT) <br> * Fig. 1, 2 * | 9,10 |
| | -- | |
| | DE - A - 2 307 430 (KOMMANDITGESELL-SCHAFT PETER BAUER) <br> * Seite 8; Fig. 6 * | 11 |
| | ---- | |

**KLASSIFIKATION DER ANMELDUNG (Int.Cl.²)**

B 60 P 1/64

**RECHERCHIERTE SACHGEBIETE (Int. Cl.²)**

B 60 P 1/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 19-06-1979 | LUDWIG |

EPA form 1503.1 06.78